# EUROPEAN PATENT APPLICATION

(11) **EP 1 790 908 A2**
(43) Date of publication of application: **30.05.2007**
(21) Application number: 06124890.2
(22) Date of filing: 28.11.2006
(51) Int. Cl.: F23R 3/00

(54) **Gas turbine combustor dome repair method**

(30) Priority: 28.11.2005 US 164526
(71) Applicant: General Electric Company, Schenectady, NY 12345 (US)
(72) Inventor: CALDWELL, James Michael, Alexandria, OH 41001 (US); HOLLAND, Thomas George, Dayton, OH 45401 (US); HOUCHENS, William Thaddeus, Cincinnati, OH 45209 (US); ELLIOT-LEWIS, Dane, Westborough, MA 01581 (US); ALTMAN JR., Robert E., Cincinnati, OH 45241 (US); BUDINGER, David Edwin, Loveland, OH 45140 (US)
(74) Representative: Illingworth-Law, William Illingworth

(57) **Abstract**

A method of repairing a combustor dome with a swirler assembly (22) having a first deflector component (23) attached to a swirler (26) having a first joint configuration includes: removing the first deflector component (23); machining a second joint configuration different from the first joint configuration in the swirler (26); providing a replacement deflector component (127) having a shape complementary to the secondjoint configuration; and securing the replacement deflector component (127) to the swirler (26).

## Description

### BACKGROUND OF THE INVENTION

This invention relates generally to combustors for gas turbine engines and more particularly to a method of repairing an annular dome of a combustor.

In gas turbine engines, compressed air is mixed with fuel and burned within a combustor to produce high-temperature working gases, which are directed to one or more downstream turbines for work extraction. A known type of combustor includes an annular dome attached to annular inner and outer liners which define a combustion chamber therebetween. Fuel injection devices are attached to the combustor in flow communication with the dome and supply fuel to the combustion chamber. The dome includes a structural dome plate carrying a plurality of swirler assemblies. Each swirler assembly includes an air swirler, and a divergent deflector assembly which extends aft from the swirler to prevent hot combustion gases from impinging upon the dome plate. The deflector assembly is comprised of a cylindrical sleeve and a deflector plate, attached at a cylindrical interface.

In some engines, the combustor dome experiences heavy "burning" (i.e. localized overheating) and oxidation of the sleeve and deflector plate. Prior art repair methods require either complete replacement of the dome with a newly manufactured dome, or repair of the dome by removal and replacement of the sleeve and deflector plate. Unfortunately, removal of the sleeve and deflector plate while preserving the geometric features of the swirler requires expensive and complex machining processes, such as wire electrodischarge machining (EDM).

Accordingly, there is a need for a method of replacing a combustor deflector plate and or sleeve using simple machining processes.

### BRIEF SUMMARY OF THE INVENTION

The above-mentioned need is met by the present invention, which according to one aspect provides a method of repairing a swirler assembly having a first deflector component attached to a swirler having a first joint configuration, including: removing the first deflector component; machining a second joint configuration different from the first joint configuration in the swirler; providing a replacement deflector component having a sleeve with a shape complementary to the second joint configuration; and securing the replacement deflector component to the swirler.

According to another aspect of the invention, a method of repairing a combustor dome for a gas turbine engine includes: providing a combustor having: a swirler defining a first joint configuration for receiving a deflector component; and a first deflector component having: a sleeve with generally conical aft section; and a generally cylindrical forward section complementary to the first joint configuration, wherein the forward section is secured to the swirler; removing the first deflector component; machining a second joint configuration different from the first joint configuration into the swirler; providing a replacement deflector component having a shape complementary to the second joint configuration; and securing the replacement deflector component to the swirler.

### BRIEF DESCRIPTION OF THE DRAWINGS

The invention may be best understood by reference to the following description of embodiments, provided by way of example only, taken in conjunction with the accompanying drawing figures in which:
Figure 1 is a cross-sectional view of a typical gas turbine engine annular combustor;
Figure 2 is an enlarged view of a swirler in the dome portion of Figure 1;
Figure 3 is a cross-sectional view of a portion of a swirler and sleeve portion of the deflector assembly in the dome showing an initial attachment joint;
Figure 4 is a view showing the swirler portion of Figure 3 machined in a different configuration for repair;
Figure 5 is a cross-sectional view of a replacement sleeve portion of the deflector assembly constructed and machined according to the present invention; and
Figure 6 is a cross-sectional view of a joined swirler and replacement sleeve portion of the deflector assembled according to the present invention.

### DETAILED DESCRIPTION OF THE INVENTION

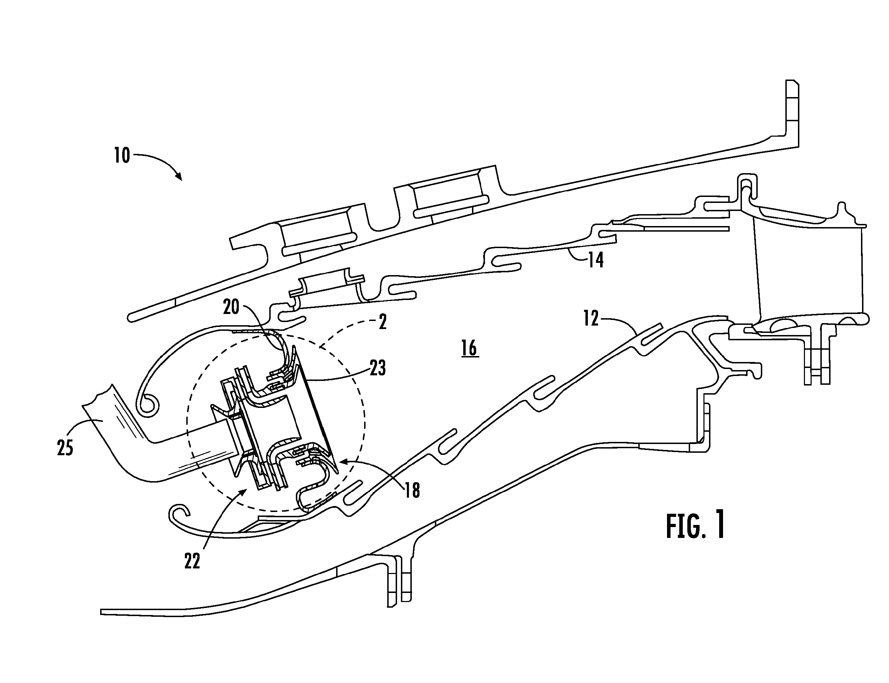

Referring to the drawings wherein identical reference numerals denote the same elements throughout the various views, Figure 1 illustrates an exemplary gas turbine engine combustor 10. The combustor 10 includes spaced-apart annular inner and outer liners 12 and 14, respectively, which define generally a combustion chamber 16. A dome assembly 18 comprising a dome plate 20 carrying a plurality of swirler assemblies 22 extends between the inner and outer liners 12 and 14. Each swirler assembly 22 has a deflector assembly 23 attached thereto. A fuel injection device 25 is located forward of the dome assembly 18 and introduces fuel into the swirler assemblies in a manner to produce a combustion process. In the exemplary embodiment, the dome 18 is arranged in a single annular configuration. The present invention is equally applicable to other known configurations such as "double annular" and "triple annular" domes (not shown) which include multiple concentric rings of swirler and deflector assemblies.

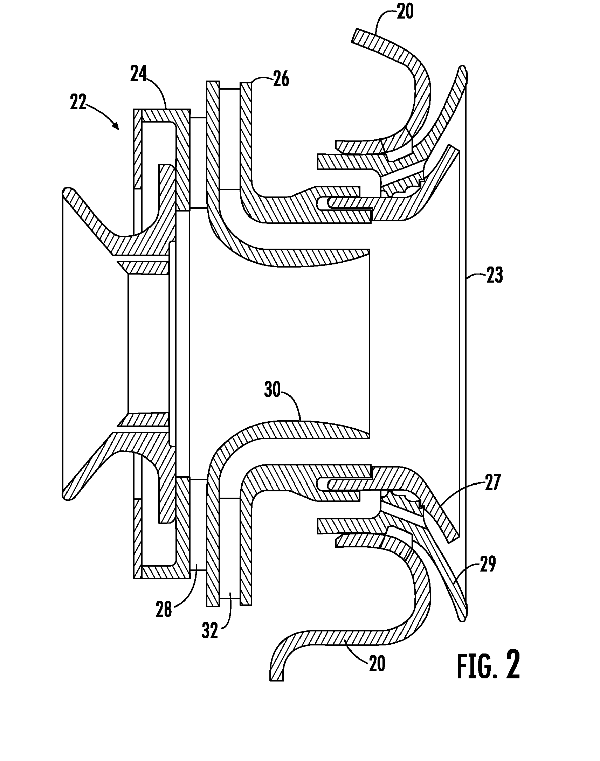

Figure 2 illustrates one of the swirler assemblies 22 in more detail. It includes a primary swirler 24 and a secondary swirler 26 integrally formed as a unitary swirler body that is fixedly received in the dome plate 20. The primary swirler 24 includes a first plurality of circumferentially spaced swirl vanes 28 disposed about a central venturi 30, and the secondary swirler 26 includes a second plurality of circumferentially spaced swirl vanes 32 disposed coaxially about the venturi 30. Incoming air passing through the first swirl vanes 28 is swirled into the venturi 30. This swirling air interacts with fuel injected from a fuel injection device (not shown in Figure 2) so as to mix as it passes into the venturi 30. The secondary swirl vanes 32 then act to present a flow of air swirling in the same or opposite direction that interacts with the fuel/air mixture so as to further atomize the mixture.

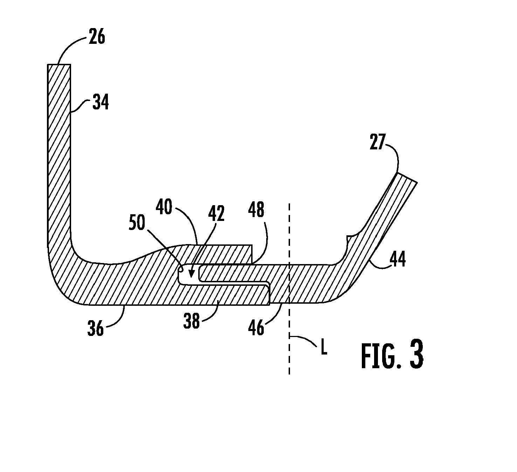

Figure 3 illustrates that the secondary swirler 26 has a radially-extending forward section 34 connected to a cylindrical axially-extending aft section 36. Together they form a generally L-shaped cross section. The aft end of the aft section 36 has an inner ring 38 and an outer ring 40 which define a cylindrical swirler groove 42 therebetween (see Figure 3) to accept the deflector assembly 23.

The deflector assembly 23 is comprised of the sleeve 27 and deflector plate 29. In some instances these may be a single integral part. The sleeve 27 of the deflector assembly 23 has a generally conical aft section 44 and a generally cylindrical forward section 46. The forward cylindrical end 46 of the sleeve 27 is formed into an axially-extending tang 48 of reduced thickness which is received in the swirler groove 42. In the illustrated example, the axial length of the tang 48 is selected so that an attachment slot 50 is present between the tang 48 and the base of the swirler groove 42. This provides space to put alloy material for the purpose of bonding the two parts. During initial manufacture, the dome 18 including the swirler assemblies 22 and deflector assemblies 23 are put through a high temperature furnace cycle sufficient to cause the alloy material to melt and flow. As a result the swirler assemblies 22 and deflector assembly 23 are thus securely bonded together. By the original process, when replacement of the deflector assembly 23 or subfeatures are required, it may not be cost effective or desirable to machine and disassemble the deflector assemblies from the entire dome 18. In the prior art, this leads to the replacement of the deflector assemblies 23 by using a process such as EDM to machine them away while maintaining the integrity of the swirler groove 42.

The dome 18 may be repaired in accordance with the present invention as follows. First, the dome 18 is separated from the rest of the combustor 10 to expose the dome plate 20, individual swirler assemblies 22 and deflector assemblies 23. Next, the original deflector assembly 23 is removed from the swirler assembly 22. In contrast to prior art repair methods, there is no need to preserve the swirler groove 42. This allows the use of simple machining methods. For example, the original deflector 23 may be cut away with an ordinary end-mill. Alternatively, the deflector assembly 23 could be removed in two steps by first separating the swirler 22 from the sleeve 27 with a mill or a fly-cutter, for example along line "L" in Figure 3, and then milling away the remainder. By this method it is possible to retain a deflector plate 29 that is not damaged for future use.

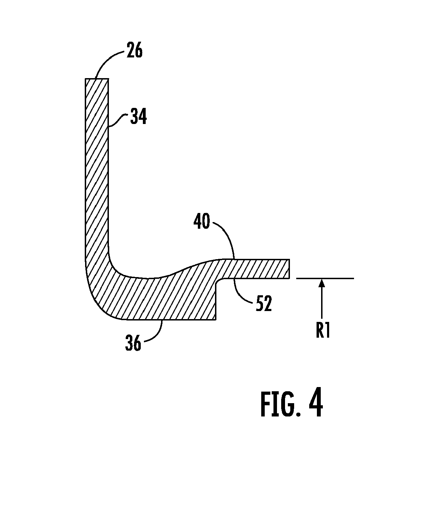

Once the original deflector assembly 23 is removed, a lap joint geometry is machined into the aft end of the aft section 36 of the secondary swirler 26. As shown in Figure 4, this is done by machining away the inner ring 38 to create a machined cylindrical surface 52 having an inner radius "R1". This can be accomplished with a conventional cutting tool. The machined diameter 52 may be formed simultaneously with the removal of the original deflector assembly 23 as described above. Depending on the exact configuration of the secondary swirler 26 and deflector assembly 23, an alternate approach may be to remove the outer ring 40 instead of the inner ring 38.

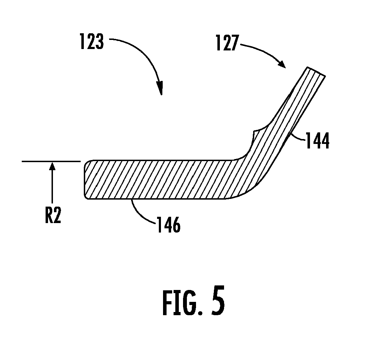

Figure 5 illustrates the sleeve portion of a replacement deflector assembly 123. The replacement deflector assembly 123 is substantially similar in construction to the original deflector assembly 23 and includes a sleeve 127 with a generally conical aft section 144 and a generally cylindrical forward section 146. The forward end of the forward section 146 lacks the annular tang 48 of the original deflector assembly 23 and instead is a substantially constant-thickness member, with an outer radius "R2" substantially equal to, or slightly smaller than the inner radius R1 of the machined cylindrical surface 52.

As with the original deflector assembly 23, the replacement deflector sleeve 127 and deflector plate similar to deflector plate 29 (not shown) may be cast or otherwise formed from a suitable high-temperature alloy such as a Mar-M-509 cobalt-based alloy. Alternatively, the replacement deflector sleeve 127 or deflector plate may be constructed from different materials, preferably an alloy having enhanced oxidation resistant material properties. It is often the case that during the service life of a gas turbine engine component, improved alloys suitable for use with such components are developed. Traditionally, engine operators would have to replace existing dome assemblies with a new dome containing components fabricated from the improved alloy to realize the enhanced material properties. However, by fabricating the replacement deflector assembly 123 or sleeve 127 or deflector plate from the improved alloy, the repaired combustor 10 may obtain, in part, the enhanced material properties and resultant extended service life.

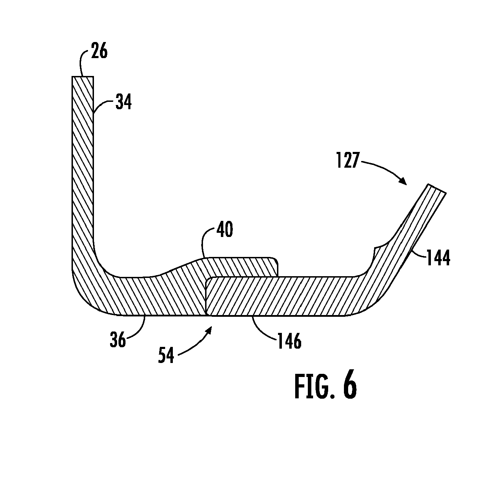

A suitable braze alloy, is placed on the radiused surface R2. The replacement deflector sleeve 127 or deflector plate is then assembled and placed in the secondary swirler 26 so that it engages the swirler groove 42, forming a lap joint 54, as shown in Figure 6. This pre-assembly sequence is then repeated for each deflector assembly 23 that is to be replaced. After all of the swirler assemblies 22 have been prepared, the dome 18 is placed in a furnace and heated at an appropriate temperature for a time sufficient to enable the attachment material to bond the deflector assembly 23 to the swirler assembly 22. Once fully processed, the dome 18 is ready for reassembly into the combustor 10.

It has been found that the above-described repair method will be much more cost-effective than either complete replacement of the dome assembly 18 or prior art methods of deflector assembly replacement. Analysis has also shown that an acceptable joint in terms of strength and operational durability is created while requiring significantly less machining effort than the original joint.

The foregoing has described a method for repairing a combustor dome. While specific embodiments of the present invention have been described, it will be apparent to those skilled in the art that various modifications thereto can be made without departing from the spirit and scope of the invention. Accordingly, the foregoing description of the preferred embodiment of the invention and the best mode for practicing the invention are provided for the purpose of illustration only and not for the purpose of limitation, the invention being defined by the claims.

## Claims

1. A method of repairing a dome assembly (18) with a swirler assembly (22) including a first deflector component (27) attached to a swirler having a first joint configuration, comprising:
removing said first deflector component (27);
machining a second joint configuration different from said first joint configuration in said swirler (26);
providing a replacement deflector component (127) having a shape complementary to said second joint configuration; and
securing said replacement deflector component (127) to the swirler (26).

2. The method of claim 1 wherein said second joint configuration is an annular machined cylindrical surface, and said swirler (26) and said replacement deflector component (127) cooperatively define a lap joint (54).

3. The method of claim 2 wherein:
said first joint configuration comprises annular, spaced-apart, axially-extending inner and outer rings (38, 40) defining a swirler groove (42) therebetween; and
said step of machining said second joint configuration comprises removing one of said inner and outer rings (38, 40) so as to form said rabbet.

4. The method of claim 1 wherein:
said first deflector component (27) comprises:
a generally conical aft section (44); and
a generally cylindrical forward section (46) having a reduced-thickness tang (48) disposed at a forward end thereof; and
said replacement deflector component plate (127) comprises:
a generally conical aft section (144); and
a generally cylindrical forward section (146).

5. The method of claim 1 wherein said replacement deflector component (127) is secured to said swirler (26) by a high temperature alloy application process.

6. A method of repairing a combustor dome for a gas turbine engine, comprising:
providing a combustor having:
a swirler (26) defining a first joint configuration for receiving a deflector component (23); and a first deflector component (23) having:
a generally conical aft section (44); and
a generally cylindrical forward section (46) complementary to said first joint configuration, wherein said forward section (46) is secured to said swirler (26);
removing said first deflector component (27);
machining a second joint configuration different from said first joint configuration into said swirler (26);
providing a replacement deflector component (127) having a shape complementary to said second joint configuration; and
securing said replacement deflector component (127) to the swirler (26).

7. The method of claim 6 wherein said second joint configuration is a cylindrical surface (52), and said swirler (26) and said replacement deflector component (127) cooperatively define a lap joint (54).

8. The method of claim 7 wherein:
said first joint configuration comprises annular, spaced-apart, axially-extending inner and outer rings (38, 40) defining a deflector component groove (50) therebetween; and
said step of machining said second joint configuration comprises removing one of said inner and outer rings (38, 40) so as to form said machined cylindrical surface.

9. The method of claim 6 wherein:
said first deflector component (23) comprises a generally cylindrical forward section (46) having a reduced-thickness tang (48) disposed at a forward end thereof; and
said replacement deflector component (127) comprises a generally cylindrical forward section (146).

10. The method of claim 6 wherein said replacement deflector (127) is secured to said swirler (26) by a high temperature alloy application process.
